# EUROPÄISCHE PATENTANMELDUNG

(11) **EP 4 699 437 A1**
(43) Veröffentlichungstag der Anmeldung: **25.02.2026**
(21) Anmeldenummer: 25195094.5
(22) Anmeldetag: 11.08.2025
(51) Int. Cl.: A01G 9/02

(54) **FASSADENELEMENT, FASSADENSYSTEM UND VERFAHREN ZUR HERSTELLUNG EINES FASSADENELEMENTS**

(30) Priorität: 19.08.2024 DE 102024002693
(71) Anmelder: STO SE & Co. KGaA, 79780 Stühlingen (DE)
(72) Erfinder: Duttlinger, Werner, 79848 Bonndorf (DE); Meidroth, Daniela, 78176 Blumberg (DE); Burger, Joris, 8049 Zuerich (CH); Bosse, Tobias, 78269 Volkertshausen (DE); Beuscher, Johanna, 60318 Frankfurt am Main (DE); Lüling, Claudia, 10785 Berlin (DE)
(74) Vertreter: Gottschalk, Matthias

(57) **Zusammenfassung**

Die Erfindung betrifft ein Fassadenelement (1) für ein Fassadensystem (100) zur Ausbildung einer begrünten vorgehängten hinterlüfteten Fassade, umfassend
- ein Abstandsgewirke (2) mit einer rückseitigen Wirkfläche (3) und einer vorderseitigen Wirkfläche (4), die über Polfäden (5) verbunden sind, wobei in das Abstandsgewirke (2) ein Substrat oder Substratgemisch (6) eingebracht ist,
- eine mit der rückseitigen Wirkfläche (3) des Abstandsgewirkes (2) verbundene Trägerschicht oder Trägerplatte (7),
- eine die vorderseitige Wirkfläche (4) des Abstandsgewirkes (2) bedeckende Bepflanzung (8), die das Substrat bzw. Substratgemisch (6) als Nährboden nutzt.

Die Erfindung betrifft ferner ein Fassadensystem (100) mit mindestens einem erfindungsgemäßen Fassadenelement (1) sowie ein Verfahren zur Herstellung eines Fassadenelements (1).

## Beschreibung

Die Erfindung betrifft ein Fassadenelement für ein Fassadensystem zur Ausbildung einer begrünten vorgehängten hinterlüfteten Fassade. Ferner betrifft die Erfindung ein Fassadensystem mit mindestens einem erfindungsgemäßen Fassadenelement, das die Ausbildung einer begrünten vorgehängten hinterlüfteten Fassade ermöglicht. Darüber hinaus wird ein Verfahren zur Herstellung eines Fassadenelements für ein Fassadensystem zur Ausbildung einer begrünten vorgehängten hinterlüfteten Fassade vorgeschlagen.

### Stand der Technik

Begrünte Fassaden gewinnen zunehmend an Bedeutung, denn sie sehen nicht nur gut aus, sondern verbessern das Klima im Gebäude sowie in der Umgebung des Gebäudes. Beispielsweise trägt eine begrünte Fassade zur Wärmeisolierung eines Gebäudes bei, so dass sich dieses in den warmen Jahreszeiten weniger stark erhitzt und der zur Kühlung erforderliche Klimatisierungsaufwand sinkt. Ferner nehmen die Pflanzen einer begrünten Fassade Kohlendioxid aus der Luft auf, wandeln es um und verbessern das Mikroklima in der Umgebung des Gebäudes.

Die einfachste Art eine begrünte Fassade auszubilden stellt das Beranken mit einer Pflanze, wie beispielsweise Efeu, dar. An der Außenwand können hierzu Rankhilfen angebracht werden, die es der Pflanze erleichtern, an der Fassade heraufzuklettern. Die Pflanze wurzelt dabei in der Erde und wird hierüber mit Wasser sowie mit allen notwendigen Nährstoffen versorgt. Man spricht in diesem Fall daher auch von einem "bodengebundenen" System.

Darüber hinaus sind "wandgebundene" Systeme bekannt. Bei einem wandgebundenen System haben die Wurzeln der Pflanzen keinen Kontakt mehr zum Erdreich. Die Versorgung der Pflanzen mit Wasser und Nährstoffen erfolgt stattdessen über in die Fassade integrierte Pflanztröge oder Pflanzrinnen, die nach dem Errichten der Fassade mit einem Substrat befüllt und bepflanzt werden. Da die Bewässerung der Pflanztröge oder Pflanzrinnen allein über Niederschläge in der Regel unzureichend ist, müssen zusätzliche Maßnahmen zur Bewässerung getroffen werden. Das heißt, dass Wasserleitungen verlegt werden müssen, über die das Wasser zu den Wurzeln der Pflanzen transportiert werden kann. Der Pflegeaufwand wandgebundener Systeme ist daher vergleichsweise hoch.

Ein Versuch, den Pflegeaufwand zu senken, geht beispielhaft aus der Offenlegungsschrift DE 10 2014 004 270 A1 hervor. Sie schlägt ein Bauelement für eine vertikale Begrünung vor, das aus einem wassersaugenden und/oder wasserdurchlässigen Werkstoff, wie beispielsweise Kalksandstein, Ziegel oder Porenbeton, hergestellt ist, und vorderseitig eine Aufnahme für ein Pflanzsubstrat aufweist. Das Bauelement weist zudem mindestens einen Bewässerungskanal auf, über den eine indirekte Bewässerung durch den wassersaugenden und/oder wasserdurchlässigen Werkstoff des Bauelements hindurch realisierbar ist, so dass das Pflanzsubstrat sehr einfach mit Wasser versorgt werden kann.

Die vorstehend genannten, aus dem Stand der Technik bekannten wandgebundenen Systeme zur Herstellung einer begrünten Fassade haben gemein, dass die Aufnahmen für das Pflanzsubstrat lediglich punktuell oder linear angeordnet sind und somit keine Begrünung in der Fläche der Fassade ermöglichen. Wünschenswert ist jedoch eine möglichst großflächige Begrünung, um die Vorteile einer begrünten Fassade voll ausschöpfen zu können.

Mit dieser Aufgabe ist die vorliegende Erfindung befasst. Zudem soll die begrünte Fassade einfach herzustellen und möglichst pflegeleicht sein.

Zur Lösung der Aufgabe wird das Fassadenelement mit den Merkmalen des Anspruchs 1 vorgeschlagen. Vorteilhafte Weiterbildungen der Erfindung sind den Unteransprüchen zu entnehmen. Darüber hinaus werden ein Fassadensystem mit einem erfindungsgemäßen Fassadenelement sowie ein Verfahren zur Herstellung eines erfindungsgemäßen Fassadenelements angegeben.

### Offenbarung der Erfindung

Das für ein Fassadensystem zur Ausbildung einer begrünten vorgehängten hinterlüfteten Fassade vorgeschlagene Fassadenelement umfasst:
- ein Abstandsgewirke mit einer rückseitigen Wirkfläche und einer vorderseitigen Wirkfläche, die über Polfäden verbunden sind, wobei in das Abstandsgewirke ein Substrat oder Substratgemisch eingebracht ist,
- eine mit der rückseitigen Wirkfläche des Abstandsgewirkes verbundene Trägerschicht oder Trägerplatte,
- eine die vorderseitige Wirkfläche des Abstandsgewirkes bedeckende Bepflanzung, die das Substrat bzw. Substratgemisch als Nährboden nutzt.

Zentraler Bestandteil des vorgeschlagenen Fassadenelements ist das Abstandsgewirke, das mit einem Substrat bzw. Substratgemisch befüllt ist. Es ermöglicht eine Bepflanzung bzw. Begrünung, die sich über die gesamte Fläche des Abstandsgewirkes erstreckt. Mit Hilfe des vorgeschlagenen Fassadenelements lässt sich demnach eine Fassade herstellen, die wie eine in die Vertikale gebrachte Wiese aussieht.

Das Fassadenelement einschließlich der Bepflanzung bzw. Begrünung wird vorgefertigt, insbesondere vorkultiviert, so dass es auf der Baustelle nur noch montiert werden muss. Die Montage kann mit Hilfe herkömmlicher Unterkonstruktionen erfolgen, so dass kein Unterschied zur Montage herkömmlicher Fassadenelemente zur Ausbildung einer vorgehängten hinterlüfteten Fassade besteht. Das vorgeschlagene Fassadenelement kann demnach auch in Kombination mit herkömmlichen Fassadenelementen eingesetzt werden, so dass begrünte und nicht begrünte Flächen abwechseln.

Dank des Abstandsgewirkes und des hierin eingebrachten Substrats bzw.

Substratgemischs ist eine aus mindestens einem erfindungsgemäßen Fassadenelement hergestellte begrünte Fassade zudem wenig pflegeintensiv. Denn das Abstandsgewirke und das Substrat bzw. Substratgemisch in Kombination ermöglichen eine flächige Wasserhaltung, die aufwendige Maßnahmen zur Bewässerung entbehrlich macht. Die flächige Wasserhaltung setzt zum einen eine hohe Wasseraufnahmefähigkeit sowie Wasserspeicherfähigkeit voraus. Zum anderen muss eine ausreichende Wasserdurchlässigkeit gegeben sein, die eine Verteilung des Wassers in der Fläche sicherstellt, so dass alle Pflanzen gleichmäßig versorgt sind. Diese Anforderungen werden vorliegend von dem Abstandsgewirke und dem Substrat bzw. Substratgemisch erfüllt, die hierzu aufeinander abgestimmt sind. Dank dieser Abstimmung wirken das Abstandsgewirke und das Substrat bzw. Substratgemisch bei der Wasserspeicherung und der Wasserverteilung zusammen. Darüber hinaus stabilisieren sich das Abstandsgewirke und das Substrat bzw. Substratgemisch gegenseitig. Das Abstandsgewirke hält das Substrat bzw. Substratgemisch zusammen und das Substrat bzw. Substratgemisch, das vorzugsweise als dichte Packung in das Abstandsgewirke eingebracht ist, hält das Abstandsgewirke in Form. Denn je dichter die Packung desto größer die Stützwirkung. Dies ist vergleichbar mit einem Sandsack, der weniger formstabil ist, wenn er nur halbgefüllt ist.

Das Abstandsgewirke des vorgeschlagenen Fassadenelements bildet eine dreidimensionale textile Struktur aus. Diese wird nach außen hin durch die beiden Wirkflächen begrenzt, die durch zwischenliegende Polfäden auf Abstand gehalten werden. Der Raum zwischen den Wirkflächen dient der Substrataufnahme und damit als Wurzelraum für die Bepflanzung. Zumindest die vorderseitige Wirkfläche muss daher durchwurzelbar sein. Um das Substrat bzw. Substratgemisch in das Abstandsgewirke einzubringen, muss zumindest eine der Wirkflächen, vorzugsweise zumindest die vorderseitige Wirkfläche, entsprechende Öffnungsgeometrien aufweisen. Die beiden Wirkflächen des Abstandsgewirkes können dabei gleich oder unterschiedlich gestaltet sein.

Bevorzugt weist zumindest die vorderseitige Wirkfläche Öffnungsgeometrien in Form von Waben auf. Die sechseckigen, sich der Kreisform annähernden Öffnungen erleichtern das Befüllen des Abstandsgewirkes mit dem Substrat bzw. Substratgemisch. Zudem stabilisiert die Wabenform die Wirkfläche. Die Länge einer Wabe, die der Diagonalen zwischen zwei Eckpunkten entspricht, beträgt vorzugsweise 25 mm bis 38 mm. Die Breite einer Wabe, die dem Abstand zweier parallel verlaufender Seiten entspricht, beträgt vorzugsweise 16 mm bis 20 mm. Denn zum einen müssen die Waben ausreichend groß zum Einbringen des Substrats bzw. Substratgemischs sein. Zum anderen dürfen sie nicht zu groß sein, um ein Herausfallen des Substrats bzw. Substratgemischs zu verhindern.

Die Herstellung der Wirkflächen einschließlich der sie verbindenden Polfäden erfolgt vorzugsweise in einem Arbeitsgang auf einer Kettenwirkmaschine. Insofern unterscheidet sich das Abstandsgewirke von einem Gewebe. Der Abstand der beiden Wirkflächen zueinander wird dabei über die Polfäden eingestellt. Diese können senkrecht und/oder schräg zu den beiden Wirkflächen verlaufen. Schräg verlaufende Polfäden führen zu einer höhen Versteifung des Abstandsgewirkes, insbesondere zu einer hohen Verschiebefestigkeit der beiden Wirkflächen zueinander. Dies gilt insbesondere, wenn die Polfäden in unterschiedlichen Richtungen schräg verlaufen und/oder sich kreuzen. Über die Verteilung der Polfäden können weitere Eigenschaften des Abstandsgewirkes eingestellt werden. Beispielsweise können Bereiche geschaffen werden, die durch eine besonders hohe Anzahl an Polfäden verstärkt sind.

Bevorzugt ist das Abstandsgewirke aus Filamentgarnen hergestellt. Bei einem Filamentgarn handelt es sich um eine Chemiefaser mit praktisch unbegrenzter Länge. Es wird daher auch als "Endlosgarn" bezeichnet. Für die Herstellung eines Abstandsgewirkes auf einer Kettenwirkmaschine ist ein Filamentgarn besonders gut geeignet. Als Chemiefaser können dem Filamentgarn zudem bestimmte Eigenschaften aufgeprägt werden, beispielsweise eine hohe Reißfestigkeit bei zugleich geringem Gewicht und/oder eine hohe Beständigkeit gegenüber UV-Strahlung, Feuchtigkeit sowie zersetzenden Bakterien und/oder Pilzen. Entsprechend robust bzw. langlebig ist ein aus einem solchen Filamentgarn hergestelltes Abstandsgewirke. Das gilt insbesondere für Anwendungen, in denen das Abstandsgewirke der Witterung ausgesetzt ist. Darüber hinaus können den Filamentgarnen flammhemmende oder selbstverlöschende Eigenschaften aufgeprägt werden, um den Anforderungen an den Brandschutz zu genügen.

In Weiterbildung der Erfindung wird vorgeschlagen, dass das Abstandsgewirke aus mindestens zwei unterschiedlichen Filamentgarnen hergestellt ist. Auf diese Weise können bestimmten Bereichen des Abstandsgewirkes bestimmte Eigenschaften zugeordnet werden, beispielsweise, um das Zusammenspiel zwischen dem Abstandsgewirke und dem hierin eingebrachten Substrat bzw. Substratgemisch zu optimieren. Bevorzugt sind die Wirkflächen aus einem ersten Filamentgarn und zumindest ein Teil der Polfäden aus einem zweiten Filamentgarn hergestellt.

Gemäß einer bevorzugten Ausführungsform der Erfindung sind die Wirkflächen aus einem Multifilamentgarn und zumindest ein Teil der Polfäden aus einem Monofilamentgarn hergestellt.

Multifilamentgarne, das heißt Garne, die aus einer Vielzahl einzelner Fasern bzw. Filamente bestehen, sind kapillaraktiv und damit hochsaugend. Sie können ein Vielfaches ihres Eigengewichts an Wasser aufnehmen. Die Verwendung eines Multifilamentgarns zur Ausbildung der Wirkflächen verbessert somit die Wasseraufnahmefähigkeit des Abstandsgewirkes. Bevorzugt wird ein Multifilamentgarn verwendet, das mindestens das 10-fache, vorzugsweise mindestens das 15-fache, weiterhin vorzugsweise mindestens das 20-fache seines Eigengewichts an Wasser aufnehmen kann. Zusätzliche Maßnahmen zur Bewässerung der Pflanzen können dann ggf. entfallen.

Multifilamentgarne können aufgrund der Kapillarkräfte Wasser auch entgegen der Schwerkraft aufnehmen, so dass die Verwendung eines Multifilamentgarns zur Ausbildung der Wirkflächen ferner einen Beitrag zur Wasserverteilung in der Fläche leistet. Die Kapillarkräfte sind dabei nicht auf hohl ausgebildete Filamente zurückzuführen, sondern auf die Hohlräume, die zwischen den einzelnen Filamenten bzw. Filamentsträngen der Multifilamentgarne verbleiben. Der Verzicht auf hohl ausgeführte Fasern bzw. Filamente ermöglicht eine hohe Anzahl an Filamenten bei einer zugleich hohen Feinheit des Multifilamentgarns.

Bevorzugt wird ein Multifilamentgarn verwendet, dessen Feinheit im Bereich von 50 dtex bis 1.000 dtex, vorzugsweise im Bereich von 80 dtex bis 500 dtex, weiterhin vorzugsweise im Bereich von 90 dtex bis 350 dtex, insbesondere im Bereich von 100 dtex bis 250 dtex liegt. Besonders bevorzugt wird ein Multifilamentgarn verwendet, dessen Feinheit 167 dtex beträgt. Dies entspricht einem Garngewicht von 167 g / 10.000 m.

Ferner bevorzugt wird ein Multifilamentgarn verwendet, das 50 bis 1.000, vorzugsweise 75 bis 750, weiterhin vorzugsweise 100 bis 400 einzelne Filamente aufweist. Des Weiteren bevorzugt bilden die einzelnen Filamente mindestens zwei Stränge, vorzugsweise mindestens drei Stränge, weiterhin vorzugsweise mindestens vier Stränge aus. Die Verarbeitung, insbesondere die Verdrehung und/oder die Verzwirnung, der einzelnen Filamente zu Filamentsträngen erhöht die Festigkeit des Multifilamentgarns. Zudem kann ein verdrehtes bzw. verzwirntes Multifilamentgarn einfacher verarbeitet werden.

Gemäß einer bevorzugten Ausführungsform der Erfindung wird ein Multifilamentgarn dtex167f128x4 bis dtex167f288x4 verwendet. Das heißt, dass das Multifilamentgarn bei einer Feinheit von 167 dtex 128 bis 228 Filamente umfasst, die vier Stränge ausbilden. Mit derartigen Multifilamentgarnen konnten besonders gute Ergebnisse hinsichtlich Wasseraufnahmefähigkeit und Wasserverteilung in der Fläche erzielt werden.

Zur Ausbildung der Polfäden oder zumindest eines Teils der Polfäden wird vorzugsweise ein Monofilamentgarn verwendet, das heißt ein Garn, das aus einer einzelnen Faser bzw. einem einzelnen Filament besteht. Durch Verwendung eines Monofilamentgarns kann die Standfestigkeit bzw. das Rückstellvermögen der dreidimensionalen textilen Struktur erhöht werden. Bevorzugt wird ein Monofilamentgarn verwendet, das einen Durchmesser von 0,1 mm bis 1,0 mm, vorzugsweise von 0,15 mm bis 0,8 mm, weiterhin vorzugsweise von 0,2 mm bis 0,6 mm aufweist. Ferner bevorzugt wird ein Monofilamentgarn mit einer Feinheitsfestigkeit von mindestens 30 cN/tex, vorzugsweise von mindestens 35 cN/tex, weiterhin vorzugsweise von mindestens 40 cN/tex verwendet. Die Feinheitsfestigkeit gibt an, unter welcher Kraft das Monofilamentgarn reißt.

Vorteilhafterweise wird ein Teil der Polfäden aus einem Monofilamentgarn und ein weiterer Teil - analog den Wirkflächen - aus einem Multifilamentgarn hergestellt. Das heißt, dass ein Teil der Polfäden ebenfalls hochsaugend ist bzw. eine hohe Wasseraufnahmefähigkeit besitzt. Die aus einem Multifilamentgarn hergestellten Polfäden tragen damit zur Wasserverteilung senkrecht zu den Wirkflächen bei, so dass Wasser in das Substrat bzw. Substratgemisch geleitet wird. Die aus einem Multifilamentgarn hergestellten Polfäden können daher auch als Dochtfäden bezeichnet werden. Zur Herstellung der Dochtfäden kann das gleiche Multifilamentgarn wie zur Herstellung der Wirkflächen verwendet werden.

Ferner wird vorgeschlagen, dass die Wirkflächen und/oder die Polfäden zumindest anteilig aus Polyester (PES), insbesondere Polyethylenterephthalat (PET), und/oder Polypropylen (PP) und/oder Glasgarnen bestehen. Besonders bevorzugt bestehen die Wirkflächen aus einem polymerbasierten PET-Multifilamentgarn und/oder die Polflächen aus einem polymerbasierten PET-Monofilamentgarn. Polymerbasierte PET-Garne sind zunächst flexibel, so dass sie leicht zu einem Abstandsgewirke verarbeitet werden können. Unter Wärmeeinwirkung können die polymerbasierten PET-Garne anschließend ausgehärtet werden, um eine Versteifung der Garne und damit eine hohe Formsteifigkeit des Abstandgewirkes zu erzielen. Das Aushärten erfolgt vorzugsweise bei einer Temperatur im Bereich von 100°C bis 250°C, beispielsweise bei 160°C.

Des Weiteren bevorzugt sind die Wirkflächen und/oder die Polfäden aus einem flammhemmenden und/oder selbstlöschenden Material gefertigt. Bei Verwendung von Filamentgarnen, das heißt von Chemiefasern, können diese Eigenschaften dem Garn aufgeprägt werden.

Bevorzugt weist das Abstandsgewirke eine Höhe von 5 mm bis 55 mm, vorzugsweise von 10 mm bis 50 mm, weiterhin vorzugsweise von 15 mm bis 45 mm, auf. Die Höhe des Abstandsgewirkes entspricht im Wesentlichen der Dicke der Substratschicht, da das Abstandsgewirke über seine gesamte Fläche und Höhe mit dem Substrat bzw. Substratgemisch befüllt ist. Mit der Höhe des Abstandsgewirkes steigt demnach auch das Gewicht des Fassadenelements, so dass geringe Höhen Gewicht einsparen zu helfen. Das Abstandsgewirke des vorgeschlagenen Fassadenelements kann eine vergleichsweise geringe Höhe aufweisen, da es einen Beitrag zur Wasseraufnahme und -verteilung leistet. Demzufolge kann auch die Dicke des eingebrachten Substrats bzw. Substratgemischs verringert werden. Das von den Pflanzen benötigte Wasser wird zwar weiterhin vorrangig durch das Substrat bzw. Substratgemisch aufgenommen und gespeichert, ohne den Beitrag des Abstandsgewirkes an der Wasserverteilung würde jedoch eine gleichmäßige Wasserverteilung in der Fläche nicht funktionieren. Grund hierfür sind die im Garnmaterial des Abstandsgewirkes wirkenden Kapillarkräfte, die Wasser auch entgegen der Schwerkraft an die benötigten Stellen leiten.

Bevorzugt weist das Abstandsgewirke entlang mindestens einer Seitenkante, vorzugsweise entlang mindestens zwei sich gegenüberliegender Seitenkanten, eine Randzone auf, die verstärkt ausgeführt ist, beispielsweise durch eine höhere Garndichte. Die mindestens eine verstärkte bzw. verdichtete Randzone dient der Stabilisierung. Zugleich hält sie das Substrat bzw. Substratgemisch im Abstandsgewirke, so dass Auswascherscheinungen verringert werden.

Des Weiteren wird vorgeschlagen, dass das Abstandsgewirke mindestens eine polfadenfreie Zone zur Ausbildung eines Hohlraums aufweist. In den Hohlraum können technische Einrichtungen, wie beispielsweise eine Bewässerungseinrichtung, eine Heizeinrichtung und/oder eine Sensorik, integriert sein. Die Bewässerungseinrichtung kann insbesondere eine Wasserleitung in Form eines Tropf- oder Schwitzschlauchs sein, so dass eine Druckwasserleitung entbehrlich ist. Mit Hilfe der Heizeinrichtung kann im Winter ein Einfrieren von Wasser in der Bewässerungseinrichtung verhindert werden. Ferner kann die Heizeinrichtung zur Vermeidung von Frostschäden an der Bepflanzung eingesetzt werden. Die Sensorik kann zur Überwachung der Temperatur, Feuchtigkeit und/oder anderer Parameter eingesetzt werden, die für die Bepflanzung von Bedeutung sind.

Die zur weiteren Stabilisierung des Abstandsgewirkes vorgesehene Trägerschicht oder Trägerplatte ist vorzugsweise stoffschlüssig mit dem Abstandsgewirke verbunden. Der Stoffschluss gewährleistet eine dauerhafte und damit sichere Verbindung. Im Fall einer Trägerschicht kann der Stoffschluss durch Beschichten oder Tränken des Abstandsgewirkes mit dem Trägerschichtmaterial hergestellt werden. Sofern die Trägerschicht aus dem Garnmaterial des Abstandsgewirkes hergestellt ist, können die Garne der rückseitigen Wirkschicht zur Herstellung des Stoffschlusses miteinander verschmolzen werden. Im Fall einer Trägerplatte kann die stoffschlüssige Verbindung insbesondere durch Verkleben hergestellt werden. Zur Verklebung des Abstandsgewirkes mit der Trägerplatte können Klebstoffe auf mineralischer oder organischer Basis verwendet werden. Bevorzugt werden organische Klebstoffe, ganz bevorzugt pastöse 2-Komponenten-Polyurethankleber, verwendet. Alternativ kann das Abstandsgewirke durch mechanische Befestigung auf der Trägerplatte fixiert werden. Hierzu können übliche Befestigungsmethoden bzw. -mittel, wie Tackern, Nieten und/oder Schrauben verwendet werden.

Gemäß einer bevorzugten Ausführungsform der Erfindung weist die Trägerschicht oder Trägerplatte rückseitig mindestens ein Befestigungs- und/oder Halteelement zur Befestigung des Fassadenelements an einem bauseitigen Untergrund auf. Mit Hilfe des Befestigungs- und/oder Halteelements kann das Fassadenelement auf der Baustelle einfach und schnell montiert werden. Das mindestens eine Befestigungs- und/oder Halteelement ist vorzugsweise ein Profil, weiterhin vorzugsweise ein Agraffenprofil. Agraffenprofile werden auch zur Befestigung herkömmlicher Fassadenelemente an einem bauseitigen Untergrund bzw. an einer hieran angebrachten Unterkonstruktion eingesetzt, so dass eine spezielle Unterkonstruktion oder sonstige aufwendige Maßnahmen zur Befestigung des erfindungsgemäßen Fassadenelements entfallen können.

Ferner bevorzugt ist entlang mindestens einer Seitenkante der Trägerschicht oder Trägerplatte ein Anschlussprofil angeordnet. Das Anschlussprofil erleichtert den Anschluss des Fassadenelements an ein weiteres Fassadenelement oder an ein angrenzendes Bauteil. Denn das Anschlussprofil definiert eine klare Abschlusskante, die wiederum einen sauberen Anschluss ermöglicht. Mit Hilfe des Anschlussprofils kann zudem eine Anschlussfuge zwischen zwei Fassadenelementen oder einem Fassadenelement und einem angrenzenden Bauteil geschlossen werden, beispielsweise um Schlagregendichtheit herzustellen.

Das Anschlussprofil ist vorzugsweise ein- oder mehrfach abgewinkelt, so dass mindestens zwei winklig zueinander angeordnete Schenkel ausgebildet werden. Diese können so angeordnet sein, dass ein Schenkel die Trägerschicht oder Trägerplatte hintergreift, so dass über diesen Schenkel das Anschlussprofil an der Rückseite der Trägerschicht bzw. Trägerplatte befestigt werden kann. Alternativ oder ergänzend kann ein Schenkel zur Ausbildung einer Tropfkante genutzt werden. Über die Tropfkante kann Oberflächenwasser gezielt abgeführt werden, beispielsweise in die Vegetationsschicht eines darunterliegenden Fassadenelements. Da Wasser schwerkraftgetrieben nach unten strömt, ist vorzugsweise zumindest entlang der unteren Seitenkante der Trägerschicht bzw. Trägerplatte ein Anschlussprofil angeordnet. Dieses kann einen Z-förmigen Querschnitt aufweisen, so dass ein Schenkel für die rückseitige Befestigung sowie ein eine Tropfkante ausbildender Schenkel vorhanden sind.

Um die Witterungsbeständigkeit des Anschlussprofils zu gewährleisten, ist dieses bevorzugt aus einem rostfreien Metall hergestellt. Besonders bevorzugt und geeignet sind Metallbleche aus Aluminium oder Edelstahl, da diese nicht rosten und sich leicht in die gewünschte Form biegen lassen.

Alternativ oder ergänzend wird vorgeschlagen, dass entlang mindestens einer Seitenkante der Trägerschicht oder Trägerplatte eine Wasserleitung angeordnet ist. Die Wasserleitung kann an derselben Seite wie das Anschlussprofil - sofern vorhanden - angeordnet sein, so dass das Anschlussprofil als Halterung für die Wasserleitung nutzbar ist. Bevorzugt verläuft die Wasserleitung im Wesentlichen horizontal, vorzugsweise mit einem leichten Gefälle, und ist an der oberen oder unteren Seite des Fassadenelements angeordnet. Wird die Wasserleitung an der oberen Seite über die gesamte Höhe des Fassadenelements genutzt werden. Wird die Wasserleitung an der unteren Seite angeordnet, kann sie insbesondere zur Bewässerung eines darunter angeordneten Fassadenelements eingesetzt werden. Die Wasserleitung ist vorzugsweise als Tropf- oder Schwitzschlauch ausgeführt, so dass eine Druckleitung entbehrlich ist. Der Bewässerungs- und damit der Pflegeaufwand sinken dadurch erheblich.

Für die Ausbildung einer Trägerplatte zur Stabilisierung des Abstandsgewirkes kommen unterschiedliche Plattenwerkstoffe in Frage. Beispielsweise kann die Trägerplatte eine Putzträgerplatte, insbesondere eine epoxidharzgebundene Putzträgerplatte aus geblähten Leichtfüllstoffen, wie beispielsweise Blähglasgranulat, sein. Ferner kann die Trägerplatte eine Kunststoffplatte oder eine Verbundplatte, beispielsweise eine Aluminiumverbundplatte, sein. Alle genannten Plattenwerkstoffe, insbesondere die Putzträgerplatte aus geblähten Leichtfüllstoffen sowie die Aluminiumverbundplatte, weisen eine hohe Formsteifigkeit bei zugleich geringem Gewicht auf. Zudem sind sie witterungsbeständig. Sofern die Trägerplatte keine Aluminiumverbundpatte ist, kann auf der Rückseite der Trägerplatte ein Deckblech, beispielsweise ein Aluminium-Deckblech, als Schutz vor mechanischen Beschädigungen und/oder als Feuchtebarriere angeordnet sein.

Um Gewicht einzusparen, beträgt vorzugsweise die Dicke der Trägerplatte weniger als 30 mm, weiterhin vorzugsweise weniger als 26 mm, noch bevorzugter weniger als 22 mm.

Das in das Abstandsgewirke eingebrachte Substrat oder Substratgemisch ist vorzugsweise ein Mehrkorn-Substrat mit einer multimodalen Korngrößenverteilung, umfassend eine Grobkornfraktion, eine Mittelkornfraktion, eine Feinkornfraktion und eine Feinstkornfraktion. Die multimodale Korngrößenverteilung führt zu einer hohen Packungsdichte, da sich die feineren Substratkörner in die Zwischenräume der gröberen Substratkörner setzen. Das heißt, dass sehr kleine Lücken zwischen den einzelnen Substratkörnern verbleiben, die wie Kapillare wirken, so dass in diesen Lücken Wasser gehalten und gespeichert wird. Denn die Kapillarkräfte verhindern, dass das in den Lücken vorhandene Wasser schwerkraftgetrieben nach unten strömt. Das in den Lücken zwischen den Substratkörnern vorhandene Wasser ist zudem für die Pflanzen leichter verfügbar als Wasser, das in Hohlräumen bzw. Poren der Substratkörner eingelagert ist. Das Mehrkorn-Substrat leistet somit einen erheblichen Beitrag zur Wasserversorgung der Pflanzen und gewährleistet - im Zusammenspiel mit dem Abstandsgewirke - eine flächige Wasserhaltung sowie eine gleichmäßige Wasserverteilung, welche essentiell für ein robustes Pflanzenwachstum sind.

Ein weiterer Vorteil des vorgeschlagenen Mehrkorn-Substrats ist, dass die enthaltene Feinstkornfraktion in Anwesenheit von Wasser aufgrund von Adhäsionskräften wie ein Bindemittel wirkt, das die einzelnen Substratkörner zusammenhält. Auf diese Weise wird ein stabiler Verbund des Substrats bzw. des Substratgemischs innerhalb des Abstandsgewirkes erreicht.

Die Grobkornfraktion weist vorzugsweise eine Korngröße von 4,0 bis 8,0 mm auf, wobei weiterhin vorzugsweise die mittlere Korngröße, das heißt der D50-Wert, 4,5 bis 7,5 mm beträgt. Die Mittelkornfraktion weist vorzugsweise eine Korngröße von 1,0 bis 4,0 mm auf, wobei weiterhin vorzugsweise die mittlere Korngröße, das heißt der D50-Wert, 1,25 bis 3,75 mm beträgt. Die Feinkornfraktion weist vorzugsweise eine Korngröße von 0,25 bis 1,0 mm auf, wobei weiterhin vorzugsweise die mittlere Korngröße, das heißt der D50-Wert, 0,3 bis 0,9 mm beträgt. Die Feinstkornfraktion weist vorzugsweise eine Korngröße < 0,25 mm auf, wobei weiterhin vorzugsweise die mittlere Korngröße bzw. der D50-Wert < 0,2 mm beträgt.

Der Gewichtsanteil der Feinstkorn- und Feinkornfraktion zusammen beträgt vorzugsweise 45 bis 70 Gew.-% bezogen auf das Gesamtgewicht des Substrats bzw. Substratgemischs. Das heißt, dass der Gewichtsanteil der Mittelkorn- und der Grobkornfraktion zusammen nicht mehr als 30 bis 55 Gew.-% betragen kann. Vorzugsweise macht der Gewichtsanteil der Feinstkorn- und der Feinkornfraktion zusammen mehr als 50% des Gesamtgewichts des Substrats bzw. Substratgemischs aus, um die gewünschte Bindemittelwirkung zu erzielen.

Neben den genannten vier Größenfraktionen kann zudem eine Gröbstkornfraktion mit einer Korngröße über 8,0 mm enthalten sein. In diesem Fall liegt vorzugsweise der Gewichtsanteil der Gröbstkornfraktion unter 10 Gew.-%, weiterhin vorzugsweise unter 5 Gew.-%, bezogen auf das Gesamtgewicht des Substrats bzw. Substratgemischs. Ein zu hoher Anteil an Grob- bzw. Gröbstkörner verstärkt die Bildung größerer Lücken und verschlechtert damit die Wasserhaltefähigkeit des Substrats bzw. Substratgemischs. Die Folge ist, dass Wasser schwerkraftgetrieben nach unten abfließt und die Wasserversorgung der Pflanzen gefährdet ist. Zudem müssen größere Öffnungsgeometrien in der mindestens einen Wirkfläche vorgesehen werden, über die das Abstandsgewirke mit dem Substrat bzw. Substratgemisch befüllt wird. Dies wiederum erhöht die Gefahr von Auswaschungen, insbesondere in Bezug auf die enthaltene Feinstkorn- sowie Feinkornfraktion.

Bevorzugt enthält das Substrat oder Substratgemisch:
- mindestens ein mineralisches Material, wie beispielsweise Lava, Bims, Blähschiefer, Blähton, Blähglas, Blähglimmer, Perlite, Vermiculit, Porlith, Diatomeenerde, Kieselgur, Ziegelsplitt und/oder ein Schichtsilikat, insbesondere Sepiolith, Montmorillonit und/oder Bentonit, und/oder
- mindestens ein organisches Material, wie beispielsweise Rindenhumus und/oder Grünschnittkompost.

Das Basismaterial ist vorzugsweise mineralischer, insbesondere silikatischer Natur. Dieses ist - im Unterschied zum ggf. ferner enthaltenen organischen Material - unverrottbar, so dass das Substrat bzw. das Substratgemisch über die Zeit nicht an Masse verliert. Durch Einsatz von geblähten und/oder porösen mineralischen Materialien kann Gewicht eingespart werden, so dass vorzugsweise zumindest die Grobkornfraktion und die Mittelkornfraktion mindestens ein geblähtes und/oder poröses mineralisches Material enthalten. Um die Beladung des Abstandsgewirkes möglichst gering zu halten, sollten die geblähten und/oder porösen Substratkörner eine Kornrohdichte nach EN 1097-6 aufweisen, die weniger als 1000 kg/m³, vorzugsweise weniger als 800 kg/m³, weiterhin vorzugsweise weniger als 600 kg/m³ beträgt. Die Kornrohdichte hängt vom Porenvolumen des einzelnen Substratkorns ab, wobei die Kornrohdichte sinkt je größer das Porenvolumen ist. Mit dem Porenvolumen steigt zugleich die Wasseraufnahmefähigkeit des Substratkorns, so dass sich auch in dieser Hinsicht ein großes Porenvolumen als Vorteil erweist.

Die Feinkornfraktion und die Feinstkornfraktion besteht vorzugsweise aus Diatomeenerde, Kieselgur und/oder einem Schichtsilikat, wie beispielsweise Sepiolith, Montmorillonit und/oder Betonit. Mit diesen kann sehr leicht die gewünschte Bindemittelfunktion erzielt werden.

Durch Zugabe eines organischen Materials, wie beispielsweise Rindenhumus und/oder Grünschnittkompost, kann die Wasserspeicherfähigkeit des Substrats bzw. Substratgemischs erhöht werden.

Das Substrat oder Substratgemisch kann zudem mindestens einen zusätzlichen Stoff, beispielsweise Diatomeenerde, Kieselgur und/oder ein quellbares Polymer, zur Erhöhung der Wasserspeicherfähigkeit enthalten. Besonders bevorzugt wird ein quellbares Polymer, auch als Quellpolymer oder Superabsorber bekannt, in Kombination mit Diatomeenerde eingesetzt. Auf die Zugabe eines organischen Materials kann in diesem Fall verzichtet werden, so dass das Substrat oder Substratgemisch möglichst keine verrottbaren Bestandteile enthält, so dass über die Zeit kein Masseverlust zu befürchten ist.

Alternativ oder ergänzend kann in dem Substrat bzw. Substratgemisch ein organisches Polymerbindemittel zur Stabilisierung enthalten sein. Das organische Polymerbindemittel unterstützt die Bindemittelfunktion der enthaltenen Feinstkornfraktion, so dass die Gefahr von Auswaschungen weiter reduziert wird.

Bezüglich der Bepflanzung des Fassadenelements wird vorgeschlagen, dass diese mindestens eine Pflanze der Gattung Sedum enthält. Pflanzen dieser Gattung sind besonders robust und pflegeleicht. Man findet sie daher häufig bei extensiv begrünten Dächern. Grundsätzlich können für die Bepflanzung des Fassadenelements solche Saatgutmischungen verwendet werden, die typischerweise bei Biodiversitätsdächern eingesetzt werden.

Vorteilhafterweise ist in das Fassadenelement mindestens ein Feuchtesensor integriert. Mit Hilfe des Feuchtesensors kann die Feuchtigkeit überwacht werden. Sollte diese zur Versorgung der Pflanzen nicht ausreichend sein, kann mittels künstlicher Bewässerung ein Austrocknen verhindert werden. Vorzugsweise sind mehrere Feuchtesensoren vorgesehen, wobei die Anzahl insbesondere von der Größe des Fassadenelements abhängen kann. Beispielsweise können drei Feuchtesensoren vorgesehen sein, ein erster in einem oberen Bereich, ein zweiter in der Mitte und ein dritter in einem unteren Bereich. Die Anordnung kann zwischen der Trägerschicht bzw. Trägerplatte und dem Abstandsgewirke erfolgen. Beispielsweise kann der mindestens eine Feuchtesensor bei der Herstellung des Fassadenelements auf der Trägerplatte angeordnet werden und diese anschließend mit dem Abstandsgewirke verklebt werden.

Damit das Fassadenelement einfach zu handhaben ist, weist es vorzugsweise eine Breite von 0,5 bis 1,5 m und eine Höhe von 0,5 bis 1,0 m auf. Bei einer entsprechenden Größe beträgt das Gewicht des Fassadenelements einschließlich Substrat bzw. Substratgemisch und Bepflanzung weniger als 55 kg.

Darüber hinaus wird ein Fassadensystem zur Ausbildung einer begrünten vorgehängten hinterlüfteten Fassade vorgeschlagen. Das Fassadensystem umfasst mindestens ein erfindungsgemäßes Fassadenelement sowie eine Unterkonstruktion zur Befestigung des Fassadenelements an einem bauseitigen Untergrund, insbesondere an einer massiv ausgebildeten tragenden Außenwand aus Beton oder Mauersteinen, da diese eine hohe Tragfähigkeit aufweist. Denn trotz des vergleichsweisen geringen Gewichts des Fassadenelements muss die Außenwand, an der das Fassadenelement befestigt werden soll, ausreichend standfest sein.

Dank der Unterkonstruktion kann das mindestens eine erfindungsgemäße Fassadenelement wie ein herkömmliches Fassadenelement zur Ausbildung einer vorgehängten hinterlüfteten Fassade montiert werden. Dadurch wird die Herstellung einer begrünten Fassade erheblich vereinfacht. Der hohe Vorfertigungsgrad des Fassadenelements, der insbesondere durch Vorkultivierung der Bepflanzung erzielt wird, hilft Zeit bei der Ausbildung einer begrünten Fassade einzusparen, da die Einzelbepflanzung vor Ort gemäß dem eingangs genannten Stand der Technik entfällt. Ferner kann mit Hilfe des mindestens einen Fassadenelements eine in der Fläche begrünte Fassade ausgebildet werden, welche die natürliche Ästhetik einer Wiese aufweist.

Der Aufwand zur Pflege einer aus dem erfindungsgemäßen Fassadensystem ausgebildeten begrünten Fassade ist dank des mindestens einen erfindungsgemäßen Fassadenelements vergleichsweise gering, so dass von einer extensiv begrünten Fassade gesprochen werden kann. Da das Abstandsgewirke und das hierin eingebrachte Substrat bzw. Substratgemisch eine flächige Wasserhaltung ermöglichen, können Maßnahmen zur Bewässerung auf ein Minimum reduziert werden. Insbesondere kann auf Druckwasserleitungen verzichtet werden.

Bevorzugt ist bzw. sind die Unterkonstruktion oder zumindest Teile der Unterkonstruktion aus Metall, insbesondere aus Aluminium und/oder Edelstahl, gefertigt. Metallische Unterkonstruktionen weisen eine hohe Tragfähigkeit auf. Unterkonstruktionen aus Aluminium und/oder Edelstahl sind zudem korrosions- und damit witterungsbeständig.

Ferner bevorzugt umfasst die Unterkonstruktion mindestens einen Wandhalter zur Befestigung am bauseitigen Untergrund sowie mindestens ein mit dem Wandhalter verbindbares Profil. Das mindestens eine Profil kann über den Wandhalter vertikal ausgerichtet werden, so dass eine Hinterlüftung der Fassade gewährleistet ist. Das über den Wandhalter am bauseitigen Untergrund befestigte Profil kann beispielsweise ein T-Profil sein. Weiterhin vorzugsweise umfasst die Unterkonstruktion ein Profil, das der Befestigung des Fassadenelements an der Unterkonstruktion dient. Dieses Profil ist vorzugsweise ein Agraffenprofil. Ein Agraffenprofil besteht üblicherweise aus zwei Profilen, die durch Einhängen verbunden werden können. Das Fassadenelement kann auf diese Weise einfach aufgehängt werden. Das erste Profil des Agraffenprofils wird hierzu unmittelbar oder mittelbar über ein weiteres Profil am bauseitigen Untergrund befestigt. Das zweite Profil wird an der Rückseite des Fassadenelements befestigt.

Des Weiteren wird ein Verfahren zur Herstellung eines Fassadenelements für ein Fassadensystem zur Ausbildung einer begrünten vorgehängten hinterlüfteten Fassade vorgeschlagen. Das Verfahren umfasst die Schritte:
a) Bereitstellen eines Abstandsgewirkes mit einer rückseitigen Wirkfläche und einer vorderseitigen Wirkfläche, die über Polfäden verbunden sind,
b) Verbinden der rückseitigen Wirkfläche mit einer Trägerschicht oder Trägerplatte,
c) Überführen des Abstandsgewirkes in eine horizontale Lage, so dass die Trägerschicht oder Trägerplatte untenliegend angeordnet ist,
d) Einbringen eines Substrats oder Substratgemischs in das Abstandsgewirke,
d) Einbringen und/oder Aufbringen eines Saatguts oder Saatgutgemischs in bzw. auf das Abstandsgewirke, vorzugsweise zusammen mit dem Substrat oder Substratgemisch und/oder im Anschluss hieran,
e) regelmäßiges Bewässern des Substrats bzw. Substratgemischs über einen Zeitraum von mehreren Wochen, vorzugsweise unter Gewächshausbedingungen, so dass sich aus dem Saatgut bzw. Saatgutgemisch Pflanzen entwickeln.

Mit Hilfe des vorgeschlagenen Verfahrens wird ein Fassadenelement zur Ausbildung einer begrünten Fassade geschaffen, das durch Einbringen von Saatgut und dessen Vorkultivierung bereits begrünt ist, bevor es auf der Baustelle montiert wird. Das heißt, dass eine Einzelbepflanzung nach der Montage entfallen kann. Die Ausbildung einer begrünten Fassade wird dadurch deutlich vereinfacht.

Während der Vorkultivierung befindet sich das Fassadenelement in liegender Position, so dass der Pflanzenwuchs senkrecht zur Ebene des Fassadenelements erfolgt. Dies verschafft dem Fassadenelement die natürliche Ästhetik einer Wiese. Die Vorkultivierung erfolgt vorzugsweise "indoor", beispielsweise in einer Gärtnerei. Sie kann sich über mehrere Wochen erstrecken, wobei der benötigte Zeitraum vom jeweiligen Saatgut und den jeweiligen Umgebungsbedingungen abhängt. Als ausreichend hat sich ein Zeitraum von etwa fünf Wochen erwiesen.

Das vorgeschlagene Verfahren ist insbesondere zur Herstellung des zuvor beschriebenen erfindungsgemäßen Fassadenelements geeignet.

In Weiterbildung des Verfahrens wird daher vorgeschlagen, dass vor dem Schritt c) rückseitig an der Trägerschicht oder Trägerplatte mindestens ein Befestigungs- und/oder Halteelement zur Befestigung des Fassadenelements an einem bauseitigen Untergrund angeordnet wird. Vor Ort auf der Baustelle muss das Fassadenelement dann nur noch montiert, insbesondere aufgehängt werden. Vorzugsweise wird ein Profil, weiterhin vorzugsweise ein Agraffenprofil, als Befestigungs- und/oder Halteelement verwendet.

Des Weiteren wird vorgeschlagen, dass entlang mindestens einer Seitenkante der Trägerschicht oder Trägerplatte ein Anschlussprofil angeordnet und mit der Trägerplatte verbunden, beispielsweise verschraubt, wird. Das Anschlussprofil erleichtert später den Anschluss des Fassadenelements an ein weiteres Fassadenelement oder an ein angrenzendes Bauteil. Vorzugsweise wird ein Anschlussprofil verwendet, das ein- oder mehrfach gewinkelt ist. Das heißt, dass ein mehrschenkliges Anschlussprofil verwendet wird, so dass das Anschlussprofil derart angeordnet werden kann, dass ein Schenkel die Trägerschicht bzw. Trägerplatte hintergreift. Ein weiterer Schenkel kann zur Ausbildung einer Tropfkante genutzt werden.

Die Erfindung und ihre Vorteile werden nachfolgend anhand der beigefügten Figuren/Zeichnungen näher erläutert. Diese zeigen:
Fig. 1 einen Vertikalschnitt durch eine begrünte vorgehängte hinterlüftete Fassade, die aus einem erfindungsgemäßen Fassadensystem mit mindestens einem erfindungsgemäßen Fassadenelement ausgebildet ist,
Fig. 2 eine perspektivische Darstellung eines Abstandsgewirkes für ein erfindungsgemäßes Fassadenelement und
Fig. 3 ein Ablaufschema eines erfindungsgemäßen Verfahrens zur Herstellung eines erfindungsgemäßen Fassadenelements.

### Ausführliche Beschreibung der Zeichnungen

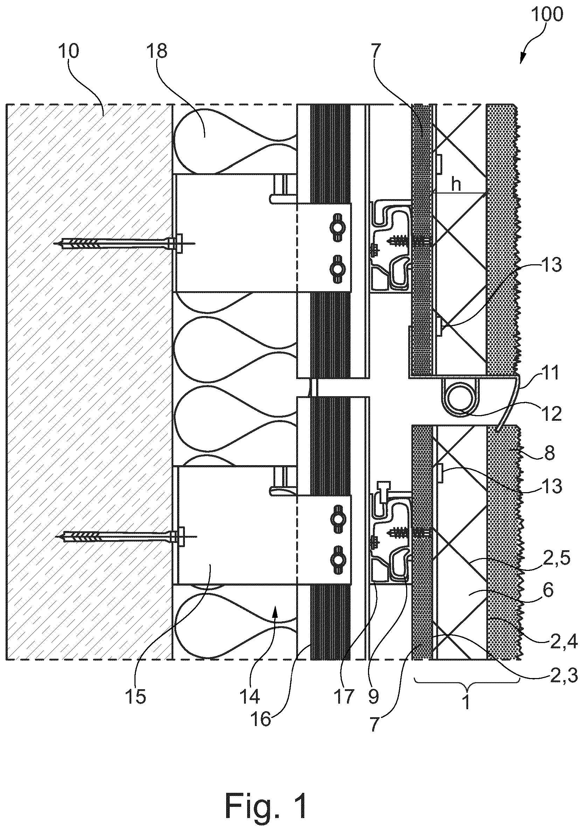

Das in der Figur 1 dargestellte erfindungsgemäße Fassadensystem 100 umfasst mehrere erfindungsgemäße Fassadenelemente 1 sowie eine Unterkonstruktion 14 zur Befestigung der Fassadenelemente 1 an einem bauseitigen Untergrund 10, der vorliegend durch eine massive Wand ausgebildet wird. Dem Vertikalschnitt der Figur 1 sind zwei angeschnittene Fassadenelemente 1 im Bereich einer Anschlussfuge zu entnehmen. Die beiden Fassadenelemente 1 sind dabei gleich ausgebildet, das heißt sie weisen den gleichen Aufbau auf. Der Aufbau ist wie folgt:
- Trägerplatte 7
- Abstandsgewirke 2 mit einem hierin eingebrachten Substratgemisch 6
- Bepflanzung 8.

Den Kern bildet das Abstandsgewirke 2 einschließlich des hierin eingebrachten Substratgemischs 6. Bei dem Abstandsgewirke 2 handelt es sich um eine dreidimensionale textile Struktur, die eine rückseitige Wirkfläche 3, eine vorderseitige Wirkfläche 4 sowie diese verbindende Polfäden 5 aufweist. Das Abstandsgewirke 2 ist zumindest bereichsweise aus einem kapillaraktiven und damit hochsaugenden Garnmaterial hergestellt. Im Zusammenspiel mit dem Substratgemisch 6, das mindestens ein poriges mineralisches Substrat enthält, ermöglicht das Abstandsgewirke 2 eine flächige Wasserhaltung und -verteilung. Das Abstandsgewirke 2 und das Substratgemisch 6 sind hierzu perfekt aufeinander abgestimmt. Der vertikale Wasserdurchfluss wird durch die Speicherfähigkeit des Substratgemischs 6 gebremst, während die Kapillarkräfte des Garnmaterials die Wasserverteilung in der Fläche unterstützen. Eine hohe Packungsdichte des Substratgemischs 6 lässt kleinste Lücken entstehen, in denen ebenfalls Kapillarkräfte wirken, die einen Beitrag zur gleichmäßigen Wasserversorgung leisten. Das Abstandsgewirke 2 in Kombination mit dem Substratgemisch 6 stellen somit die Basis für eine robuste und zugleich wenig pflegeintensive Bepflanzung 8 dar. Dank dieser Synergieeffekte kann die Höhe h des Abstandsgewirkes 2 auf ein Minimum reduziert werden, was sich positiv auf das Gewicht des Fassadenelements 1 auswirkt.

Die hohe Packungsdichte des Substratgemischs 6 stabilisiert zudem das Abstandsgewirke 2, so dass es nicht zusammenfallen bzw. kollabieren kann.

Stabilisiert wird das Abstandsgewirke 2 darüber hinaus durch die rückseitig angeordnete Trägerplatte 7, so dass das Fassadenelement 1 selbsttragend ist. Wie der Figur 1 zu entnehmen ist, kann entlang der unteren Seitenkante ein mehrfach abgewinkeltes Anschlussprofil 11 angeordnet sein, das rückseitig an der Trägerplatte 7 befestigt, beispielsweise verschraubt, ist. Ein Schenkel des Anschlussprofils kann zur Ausbildung einer Tropfkante genutzt werden, über die nach unten ablaufendes Wasser gezielt in das jeweils darunter liegende Fassadenelement 1 zur Bewässerung der Bepflanzung 8 eingeleitet werden kann. Das Anschlussprofil 11 kann zudem der Befestigung einer Wasserleitung 12 dienen, die vorzugsweise als Tropf- oder Schwitzleitung ausgeführt ist.

Zur Überwachung der gespeicherten Feuchtigkeit kann mindestens ein Feuchtesensor 13 in das Fassadenelement 1 integriert sein. Vorliegend sind drei Feuchtesensoren 13 vorgesehen, jeweils einer in einem oberen Bereich, einer in der Mitte und einer in einem unteren Bereich.

Die dargestellten Fassadenelemente 1 weisen auf ihren Rückseiten Befestigungs- und/oder Halteelemente 9 auf, mittels welcher sie in einfacher Weise an der Unterkonstruktion 14 befestigt werden können. Die Befestigungs- und/oder Haltelemente 9 umfassen ein Profil 17, das vorliegend als Agraffenprofil ausgeführt ist. Das heißt, dass das Profil 17 aus zwei ineinander einhängbaren Profilen bzw. Profilteilen besteht, von denen ein erstes am Fassadenelement 1 und ein zweites an der Unterkonstruktion 14 befestigt wird, so dass anschließend das Fassadenelement 1 nur noch eingehängt werden muss. Das Profil 17 ist vorliegend an einem Profil 16 befestigt, das T-förmig ausgeführt ist und über einen Wandhalter 15 am bauseitigen Untergrund 10 befestigt ist. Diese Art der Unterkonstruktion 14 ermöglicht die Ausbildung einer vorgehängten hinterlüfteten Fassade, insbesondere dann, wenn auf den bauseitigen Untergrund 10 zusätzlich eine Wärmedämmung 18 aufgebracht werden soll.

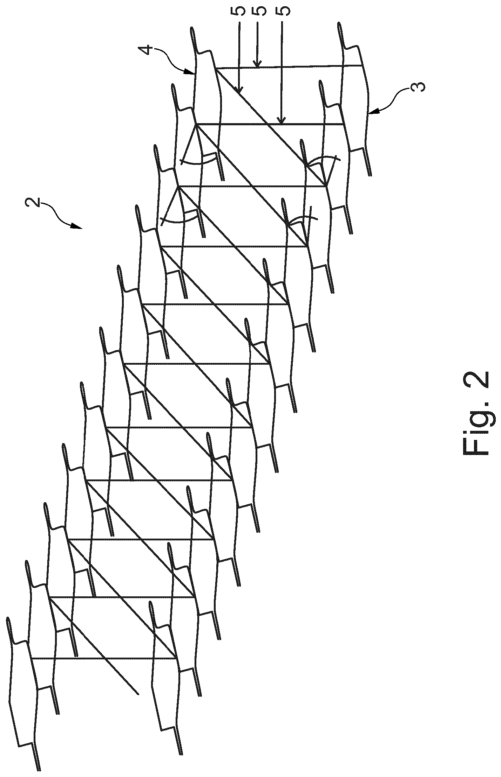

Der Figur 2 ist beispielhaft ein Abstandsgewirke 2 für ein erfindungsgemäßes Fassadenelement 1 zu entnehmen. Dieses weist eine rückseitige Wirkfläche 3 sowie eine vorderseitige Wirkfläche 4 auf, die jeweils wabenförmige Öffnungen ausbilden. Die beiden Wirkflächen 3, 4 sind über Polfäden 5 verbunden, die sowohl senkrecht als auch schräg zu den Wirkflächen 3, 4 verlaufen. Dadurch wird eine hohe Verschiebefestigkeit der beiden Wirkflächen 3, 4 zueinander erreicht.

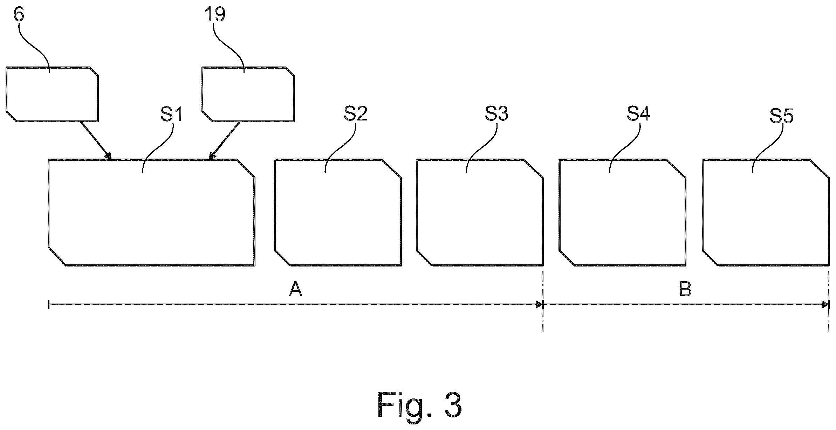

Der Figur 3 ist schematisch der Ablauf eines Verfahrens zur Herstellung eines erfindungsgemäßen Fassadenelements 1 zu entnehmen, wobei die Schritte S1 bis S3 "indoor" (siehe Pfeil A), beispielsweise in einem Gewächshaus, und die Schritte S4 und S5 "outdoor" (siehe Pfeil B) erfolgen.

In Schritt S1 werden die Trägerpatte 7 und das Abstandsgewirke 2 verbunden sowie das mindestens eine Befestigungs- und/oder Halteelement 9 angebracht. In dann liegender Position werden das Substrat bzw. Substratgemisch 6 sowie das Saatgut bzw. Saatgutgemisch 19 in das Abstandsgewirke 2 eingebracht. Hieran schließt sich Schritt S2 an, der die Vorkultivierung der Bepflanzung 8 in weiterhin liegender Position des Fassadenelements 1 umfasst. Nach einigen Wochen kann dann in Schritt S3 das Fassadenelement 1 aufgerichtet werden, um die Bepflanzung 8 an die vertikale Wuchsrichtung zu gewöhnen. Schritt S3 erfolgt "indoor". In Schritt S4 wird dann das Fassadenelement 1 in den Außenbereich verlagert, um die Bepflanzung 8 abzuhärten. Schritt S4 erfolgt dann "outdoor". Erweist sich der Pflanzenbewuchs als robust, kann das Fassadenelement 1 in Schritt S5 ausgeliefert werden.

### Bezugszeichenliste

- 1: Fassadenelement
- 2: Abstandsgewirke
- 3: Rückseitige Wirkfläche
- 4: Vorderseitige Wirkfläche
- 5: Polfaden
- 6: Substratgemisch
- 7: Trägerplatte
- 8: Bepflanzung
- 9: Befestigungs- und/oder Halteelement
- 10: Bauseitiger Untergrund
- 11: Anschlussprofil
- 12: Wasserleitung
- 13: Feuchtesensor
- 14: Unterkonstruktion
- 15: Wandhalter
- 16: Profil
- 17: Profil
- 18: Wärmedämmung
- 19: Saatgutgemisch

- 100: Fassadensystem

## Patentansprüche

1. Fassadenelement (1) für ein Fassadensystem (100) zur Ausbildung einer begrünten vorgehängten hinterlüfteten Fassade, umfassend
- ein Abstandsgewirke (2) mit einer rückseitigen Wirkfläche (3) und einer vorderseitigen Wirkfläche (4), die über Polfäden (5) verbunden sind, wobei in das Abstandsgewirke (2) ein Substrat oder Substratgemisch (6) eingebracht ist,
- eine mit der rückseitigen Wirkfläche (3) des Abstandsgewirkes (2) verbundene Trägerschicht oder Trägerplatte (7),
- eine die vorderseitige Wirkfläche (4) des Abstandsgewirkes (2) bedeckende Bepflanzung (8), die das Substrat bzw. Substratgemisch (6) als Nährboden nutzt.

2. Fassadenelement (1) nach Anspruch 1,
**dadurch gekennzeichnet, dass** das Abstandsgewirke (2) aus Filamentgarn, vorzugsweise aus mindestens zwei unterschiedlichen Filamentgarnen, hergestellt ist, wobei vorzugsweise die Wirkflächen (3, 4) aus einem Multifilamentgarn und zumindest ein Teil der Polfäden (5) aus einem Monofilamentgarn hergestellt sind.

3. Fassadenelement (1) nach Anspruch 1 oder 2,
**dadurch gekennzeichnet, dass** die Wirkflächen und/oder die Polfäden zumindest anteilig aus Polyester (PES), insbesondere Polyethylenterephthalat (PET), und/oder Polypropylen (PP) und/oder Glasgarnen bestehen.

4. Fassadenelement (1) nach einem der vorhergehenden Ansprüche,
**dadurch gekennzeichnet, dass** das Abstandsgewirke (2) eine Höhe (h) von 5 mm bis 65 mm, vorzugsweise von 10 mm bis 60 mm, weiterhin vorzugsweise von 15 mm bis 55 mm, besonders bevorzugt von 20 mm bis 50 mm aufweist.

5. Fassadenelement (1) nach einem der vorhergehenden Ansprüche,
**dadurch gekennzeichnet, dass** das Abstandsgewirke (2) entlang mindestens einer Seitenkante, vorzugsweise entlang mindestens zwei sich gegenüberliegender Seitenkanten, eine Randzone aufweist, die verstärkt ausgeführt ist, beispielsweise durch eine höhere Fadendichte, insbesondere Polfadendichte.

6. Fassadenelement (1) nach einem der vorhergehenden Ansprüche,
**dadurch gekennzeichnet, dass** das Abstandsgewirke (2) mindestens eine polfadenfreie Zone zur Ausbildung eines Hohlraums aufweist, in den vorzugsweise eine Bewässerungseinrichtung integriert ist.

7. Fassadenelement (1) nach einem der vorhergehenden Ansprüche,
**dadurch gekennzeichnet, dass** die Trägerschicht oder Trägerplatte (7) stoffschlüssig mit dem Abstandsgewirke (2) verbunden, beispielsweise verklebt, ist.

8. Fassadenelement (1) nach einem der vorhergehenden Ansprüche,
**dadurch gekennzeichnet, dass** die Trägerschicht oder Trägerplatte (7) rückseitig mindestens ein Befestigungs- und/oder Halteelement (9) zur Befestigung des Fassadenelements an einem bauseitigen Untergrund (10) aufweist, wobei vorzugsweise das Befestigungs- und/oder Halteelement (9) ein Profil, weiterhin vorzugsweise ein Agraffenprofil ist.

9. Fassadenelement (1) nach einem der vorhergehenden Ansprüche,
**dadurch gekennzeichnet, dass** entlang mindestens einer Seitenkante der Trägerschicht oder Trägerplatte (7) ein vorzugsweise ein- oder mehrfach abgewinkeltes Anschlussprofil (11) und/oder eine Wasserleitung (12) angeordnet ist bzw. sind.

10. Fassadenelement (1) nach einem der vorhergehenden Ansprüche,
**dadurch gekennzeichnet, dass** die Trägerplatte (7) eine
- Putzträgerplatte, insbesondere eine epoxidharzgebundene Putzträgerplatte aus geblähten Leichtfüllstoffen, wie beispielsweise Blähglasgranulat,
- eine Kunststoffplatte oder
- eine Verbundplatte, beispielsweise eine Aluminiumverbundplatte, ist,
wobei vorzugsweise auf der Rückseite der Trägerplatte (7) ein Deckblech, beispielsweise ein Aluminium-Deckblech, angeordnet ist.

11. Fassadenelement (1) nach einem der vorhergehenden Ansprüche,
**dadurch gekennzeichnet, dass** das Substrat oder Substratgemisch (6) ein Mehrkorn-Substrat mit einer multimodalen Korngrößenverteilung ist, umfassend eine Grobkornfraktion, eine Mittelkornfraktion, eine Feinkornfraktion und eine Feinstkornfraktion.

12. Fassadenelement (1) nach einem der vorhergehenden Ansprüche,
**dadurch gekennzeichnet, dass** das Substrat oder Substratgemisch (6)
- mindestens ein mineralisches Material, wie beispielsweise Lava, Bims, Blähschiefer, Blähton, Blähglas, Blähglimmer, Perlite, Vermiculit, Porlith, Diatomeenerde, Kieselgur, Ziegelsplitt und/oder ein Schichtsilikat, insbesondere Sepiolith, Montmorillonit und/oder Bentonit, und/oder
- mindestens ein organisches Material, wie beispielsweise Rindenhumus und/oder Grünschnittkompost,
enthält.

13. Fassadenelement (1) nach einem der vorhergehenden Ansprüche,
**dadurch gekennzeichnet, dass** das Substrat oder Substratgemisch (6)
- mindestens einen zusätzlichen Stoff, beispielsweise Diatomeenerde, Kieselgur und/oder ein quellbares Polymer, zur Erhöhung der Wasserspeicherkapazität und/oder
- ein organisches Polymerbindemittel zur Stabilisierung enthält.

14. Fassadenelement (1) nach einem der vorhergehenden Ansprüche,
**dadurch gekennzeichnet, dass** die Bepflanzung (8) mindestens eine Pflanze der Gattung Sedum enthält.

15. Fassadenelement (1) nach einem der vorhergehenden Ansprüche,
**dadurch gekennzeichnet, dass** in das Fassadenelement (1) mindestens ein Feuchtesensor (13) integriert ist.

16. Fassadensystem (100) zur Ausbildung einer begrünten vorgehängten hinterlüfteten Fassade, umfassend mindestens ein Fassadenelement (1) nach einem der vorhergehenden Ansprüche sowie eine Unterkonstruktion (14) zur Befestigung des Fassadenelements (1) an einem bauseitigen Untergrund (10), insbesondere an einer massiv ausgebildeten tragenden Außenwand aus Beton oder Mauersteinen.

17. Fassadensystem (100) nach Anspruch 16,
**dadurch gekennzeichnet, dass** die Unterkonstruktion (14) oder zumindest Teile der Unterkonstruktion (14) aus Metall, insbesondere aus Aluminium und/oder Edelstahl, gefertigt ist bzw. sind.

18. Fassadensystem (100) nach Anspruch 16 oder 17,
**dadurch gekennzeichnet, dass** die Unterkonstruktion (14) mindestens einen Wandhalter (15) zur Befestigung am bauseitigen Untergrund (10) sowie mindestens ein mit dem Wandhalter (15) verbindbares Profil (16, 17), vorzugsweise ein Agraffenprofil, umfasst.

19. Verfahren zur Herstellung eines Fassadenelements (1) für ein Fassadensystem (100) zur Ausbildung einer begrünten vorgehängten hinterlüfteten Fassade, umfassend die Schritte
a) Bereitstellen eines Abstandsgewirkes (2) mit einer rückseitigen Wirkfläche (3) und einer vorderseitigen Wirkfläche (4), die über Polfäden (5) verbunden sind,
b) Verbinden der rückseitigen Wirkfläche (3) mit einer Trägerschicht oder Trägerplatte (7),
c) Überführen des Abstandsgewirkes (2) in eine horizontale Lage, so dass die Trägerschicht oder Trägerplatte (7) untenliegend angeordnet ist,
d) Einbringen und/oder Aufbringen eines Saatguts oder Saatgutgemischs (6) in bzw. auf das Abstandsgewirke (2), vorzugsweise zusammen mit dem Substrat oder Substratgemisch (6) und/oder im Anschluss hieran,
e) regelmäßiges Bewässern des Substrats bzw. Substratgemischs (6) über einen Zeitraum von mehreren Wochen, vorzugsweise unter Gewächshausbedingungen, so dass sich aus dem Saatgut bzw. Saatgutgemisch (19) Pflanzen entwickeln.

20. Verfahren nach Anspruch 19,
**dadurch gekennzeichnet, dass** vor dem Schritt c) rückseitig an der Trägerschicht oder Trägerplatte (7) mindestens ein Befestigungs- und/oder Halteelement (9) zur Befestigung des Fassadenelements (1) an einem bauseitigen Untergrund (10) angeordnet wird, wobei vorzugsweise ein Profil (17), weiterhin vorzugsweise ein Agraffenprofil, als Befestigungs- und/oder Halteelement (9) verwendet wird.

21. Verfahren nach Anspruch 19 oder 20,
**dadurch gekennzeichnet, dass** entlang mindestens einer Seitenkante der Trägerschicht oder Trägerplatte (7) ein Anschlussprofil (11) angeordnet und mit der Trägerplatte (7) verbunden, beispielsweise verschraubt, wird, wobei vorzugsweise ein Anschlussprofil (11) verwendet wird, das ein- oder mehrfach gewinkelt ist.
